# FASCICULE DE BREVET EUROPEEN

(11) **EP 3 916 441 B1**
(45) Date de publication et mention de la délivrance du brevet: **03.04.2024**
(21) Numéro de dépôt: 21176185.3
(22) Date de dépôt: 27.05.2021
(51) Int. Cl.: G02B 6/00

(54) **DISPOSITIF DE RÉPARTITION DE LUMIÈRE BASÉ SUR UN GUIDE D'ONDE PLANAIRE**
LICHTVERTEILUNGSVORRICHTUNG AUF BASIS EINES PLANAREN WELLENLEITERS
DEVICE FOR DISTRIBUTING LIGHT BASED ON A PLANAR WAVEGUIDE

(30) Priorité: 28.05.2020 FR 2005622
(43) Date de publication de la demande: 01.12.2021
(73) Titulaire: COMMISSARIAT À L'ÉNERGIE ATOMIQUE ET AUX ÉNERGIES ALTERNATIVES, 75015 Paris (FR)
(72) Inventeur: MONPEURT, Cyrielle, 38054 Grenoble Cedex 09 (FR); JOBERT, Gabriel, 38054 Grenoble Cedex 09 (FR)
(74) Mandataire: Brevalex

(56) Documents cités:
- EP-A1- 3 488 221
- US-A- 6 139 163
- US-A1- 2008 084 709

## Description

### Domaine technique

L'invention se rapporte à un dispositif de répartition de lumière adapté pour, en utilisation, recevoir des rayons lumineux en provenance d'une source lumineuse et répartir ces rayons sur une scène à éclairer.

### Etat de la technique antérieure

On connaît dans l'art antérieur des systèmes optiques d'imagerie sans lentille, dans lesquels un module de détection acquiert une image grand champ d'un échantillon. L'échantillon et le module de détection sont placés à proximité immédiate l'un de l'autre, sans optique imageante entre les deux. Une source lumineuse fournit la lumière pour éclairer l'échantillon. Un dispositif de répartition de lumière peut être disposé en sortie de la source lumineuse, pour récupérer la lumière d'un faisceau lumineux étroit émis par la source lumineuse, et répartir cette lumière sur une surface étendue appartenant à l'échantillon. Le dispositif de répartition de lumière présente avantageusement une épaisseur réduite, lui permettant d'être logé dans un espace d'épaisseur inférieure ou égale à la distance qui sépare, en utilisation, l'échantillon du module de détection.

La demande de brevet FR1914926 décrit un exemple d'un tel système optique, pour mettre en oeuvre une analyse par spectrométrie infrarouge sur un échantillon. Dans cet exemple, le dispositif de répartition de lumière est constitué par une série de structures d'extraction passives, couplées chacune à un guide d'onde secondaire respectif, et intégrées avec les guides d'onde secondaires sur un même substrat. Les guides d'onde secondaires sont couplés eux-mêmes à un guide d'onde principal par couplage évanescent. Les structures d'extraction passives sont formées chacune par une surface réfléchissante, située en sortie du guide d'onde secondaire correspondant et inclinée en biais relativement au plan du substrat. Chaque surface réfléchissante est formée par un revêtement réfléchissant déposé sur une interface gravée du substrat.

Un tel dispositif de répartition de lumière présente plusieurs inconvénients, notamment une fabrication complexe imposant la réalisation d'une multitude de guides d'onde secondaires et de facettes en biais dans le substrat, et une répartition peu homogène de la lumière sur la surface à éclairer de l'échantillon.

EP3488221A1 peut être aussi cité comme exemple de système optique d'imagerie sans lentille de l'art antérieur.

Un objectif de la présente invention est de proposer un dispositif de répartition de lumière apte à être intégré dans un système optique d'imagerie sans lentille pour, en utilisation, répartir sur une scène à éclairer des rayons lumineux provenant d'une source lumineuse annexe, et qui ne présente pas les inconvénients de l'art antérieur mentionnés ci-dessus.

### Présentation de l'invention

Cet objectif est atteint avec un dispositif de répartition de lumière configuré pour, en utilisation, répartir sur une scène à éclairer des rayons lumineux provenant d'une source lumineuse annexe, et qui comporte :
- un guide d'onde planaire, dont deux faces de plus grande étendue sont parallèles entre elles et forment chacune une face principale respective du guide d'onde planaire ;
- un renfoncement, qui s'étend dans le guide d'onde planaire depuis l'une des faces principales, et qui forme une zone d'injection configurée pour réaliser l'injection de rayons lumineux dans le guide d'onde planaire ; et
- une ouverture traversante, qui s'étend dans le guide d'onde planaire de l'une à l'autre de ses faces principales, et qui forme une zone d'extraction configurée pour réaliser l'extraction hors du guide d'onde planaire, des rayons lumineux injectés dans la zone d'injection et ayant circulé dans le guide d'onde planaire.

L'épaisseur du dispositif de répartition de lumière correspond à l'épaisseur du guide d'onde planaire. Le dispositif de répartition de lumière peut donc présenter une épaisseur réduite, compatible notamment avec son intégration dans un système optique d'imagerie sans lentille tel que celui décrit en introduction. En particulier, le dispositif de répartition de lumière selon l'invention peut aisément présenter une épaisseur inférieure ou égale à la distance qui sépare, en utilisation, l'échantillon et le module de détection dans le système optique d'imagerie sans lentille décrit en introduction. Cette épaisseur est avantageusement inférieure ou égale à 1,5 mm.

La fabrication d'un dispositif de répartition de lumière selon l'invention nécessite la réalisation de deux structures, seulement au sein d'un simple guide d'onde planaire. Le dispositif de répartition de lumière selon l'invention peut donc être fabriqué de manière simple, rapide et peu coûteuse.

En fonctionnement, la lumière est injectée dans le dispositif de répartition de lumière au niveau du renfoncement formant une zone d'injection. Elle pénètre dans le guide d'onde planaire en étant réfractée. Elle circule ensuite dans le guide d'onde planaire, depuis la zone d'injection jusqu'à la zone d'extraction, par réflexions successives sur les faces principales du guide d'onde planaire et avec de préférence au moins une réflexion sur une face latérale du guide d'onde planaire. Au cours de sa propagation dans le guide d'onde planaire, la lumière n'est confinée que selon l'axe de l'épaisseur du guide d'onde planaire. Dans les deux autres dimensions de l'espace, la propagation dans le guide d'onde planaire peut ainsi se traduire par un étalement spatial de la lumière, plus important encore que l'étalement spatial qui serait obtenu en espace libre (grâce à une propagation par réflexions successives et non en ligne droite). Au niveau de la zone d'extraction, la lumière ayant circulé dans le guide d'onde planaire est extraite hors de celui-ci, en direction de la scène à éclairer. La lumière émerge du guide d'onde planaire en étant réfractée, au niveau de bords latéraux de l'ouverture traversante.

En utilisation, le dispositif de répartition de lumière selon l'invention réalise ainsi une récupération de la lumière d'un faisceau de lumière étroit, et une répartition de cette lumière de manière homogène, sur une surface de grande étendue située à l'extérieur du guide d'onde planaire. Ladite surface de grande étendue appartient de préférence à un échantillon à analyser. Elle présente de préférence une largeur supérieure ou égale à 1 mm (la largeur désignant la plus grande distance séparant deux points sur la surface considérée, par exemple un diamètre ou un grand axe d'ellipse).

L'invention permet ainsi de répartir la lumière sur une large surface, de manière homogène, et à l'aide d'un dispositif fin et facile à fabriquer.

Selon un premier mode de réalisation avantageux :
- le guide d'onde planaire a ses deux faces principales chacune en forme de carré et présente une forme de parallélépipède rectangle, et
- dans une projection du dispositif de répartition de lumière dans le plan de l'une des faces principales du guide d'onde planaire, le renfoncement et l'ouverture traversante sont centrés chacun sur une ligne séparant ladite face principale en deux rectangles de mêmes dimensions, avec les centres respectifs du renfoncement et de l'ouverture traversante situés chacun à une même distance du centre de ladite face principale.

Avantageusement, le renfoncement a une forme de première pyramide, où ladite première pyramide est une pyramide droite à base carrée.

L'ouverture traversante peut avoir une forme de seconde pyramide tronquée au sommet, où ladite seconde pyramide est une pyramide droite à base carrée. La première pyramide et la seconde pyramide peuvent avoir leurs bases respectives parallèles aux faces principales du guide d'onde planaire, et être orientées selon deux sens opposés.

En variante, l'ouverture traversante peut avoir une forme de volume de révolution, invariant autour d'un axe orthogonal aux faces principales du guide d'onde planaire, et l'intersection entre le guide d'onde planaire et une génératrice dudit volume de révolution peut comprendre un segment courbe.

Selon un second mode de réalisation avantageux :
- le guide d'onde planaire a ses deux faces principales chacune en forme d'ellipse et présente une forme de cylindre droit à base elliptique,
- chaque face principale en forme d'ellipse est munie de deux foyers, et
- dans une projection du dispositif de répartition de lumière dans le plan de l'une des faces principales du guide d'onde planaire, le renfoncement et l'ouverture traversante sont centrés chacun sur l'un respectif desdits foyers.

Avantageusement, le renfoncement a une forme de cône de révolution entier ou tronqué au sommet. L'ouverture traversante peut avoir une forme de volume de révolution, invariant autour d'un axe orthogonal aux faces principales du guide d'onde planaire, et l'intersection entre le guide d'onde planaire et une génératrice dudit volume de révolution peut comprendre un segment courbe.

De préférence, le guide d'onde planaire est transparent dans l'infrarouge.

De façon avantageuse :
- le renfoncement est configuré pour réaliser l'injection, dans le guide d'onde planaire, de rayons lumineux provenant d'un demi-espace supérieur ; et
- l'ouverture traversante est configurée pour réaliser l'extraction de rayons lumineux, hors du guide d'onde planaire, et vers un demi-espace inférieur ;
où les demi-espaces inférieur et supérieur forment ensemble un espace à trois dimensions, et s'étendent chacun d'un côté respectif d'un plan parallèle aux faces principales du guide d'onde planaire et passant à mi-hauteur dans le guide d'onde planaire.

L'invention couvre également un système d'imagerie infrarouge qui comporte :
- un dispositif de répartition de lumière selon l'invention, configuré pour, en utilisation, répartir sur une scène à éclairer des rayons lumineux provenant d'une source lumineuse annexe ; et
- un module de détection, comportant un détecteur infrarouge matriciel configuré pour recevoir des rayons lumineux renvoyés par la scène à éclairer ;
avec le détecteur infrarouge matriciel situé au regard de l'ouverture traversante du dispositif de répartition de lumière.

Le système peut comporter en outre une source lumineuse infrarouge formant la source lumineuse annexe, et le dispositif de répartition de lumière est configuré pour, en utilisation, recevoir en entrée des rayons lumineux provenant de ladite source lumineuse infrarouge et répartir ces rayons sur la scène à éclairer, avec l'entrée du dispositif de répartition de lumière formée par le renfoncement du dispositif de répartition de lumière.

Le système peut comporter en outre un élément d'espacement, monté solidaire du module de détection, et comportant une surface d'appui et une ouverture traversante, avec la surface d'appui située d'un côté de l'élément d'espacement opposé au module de détection, et avec l'ouverture traversante située au regard du détecteur infrarouge matriciel, et dans lequel le dispositif de répartition de lumière forme tout ou partie de l'élément d'espacement.

### Brève description des figures

La présente invention sera mieux comprise à la lecture de la description d'exemples de réalisations donnés à titre purement indicatif et nullement limitatif, en faisant référence aux dessins annexés sur lesquels :
[Fig. 1A] illustre de façon schématique, et selon une vue en perspective, un premier mode de réalisation d'un dispositif de répartition de lumière selon l'invention ;
[Fig. 1B] illustre de façon schématique les positions respectives du renfoncement et de l'ouverture traversante dans un dispositif similaire à celui de la figure 1A ;
[Fig. 1C], [Fig. 1D], [Fig. 1E], [Fig. 1G] illustrent différentes vues en coupe du dispositif de la figure 1A ;
[Fig. 1F] illustre le résultat d'une simulation de tracé de rayons dans le dispositif de la figure 1A ;
[Fig. 2A] illustre de façon schématique, et selon une vue en perspective, un deuxième mode de réalisation d'un dispositif de répartition de lumière selon l'invention ;
[Fig. 2B], [Fig. 2C] illustrent différentes vues en coupe du dispositif de la figure 2A ;
[Fig. 2D] illustre le résultat d'une simulation de tracé de rayons dans le dispositif de la figure 2A ;
[Fig. 3A] illustre de façon schématique, et selon une vue en perspective, un troisième mode de réalisation d'un dispositif de répartition de lumière selon l'invention ;
[Fig. 3B] illustre de façon schématique les positions respectives du renfoncement et de l'ouverture traversante dans un dispositif similaire à celui de la figure 3A ;
[Fig. 3C], [Fig. 3D], [Fig. 3E] illustrent différentes vues en coupe du dispositif de la figure 3A ;
[Fig. 4A] illustre de façon schématique, et selon une vue de côté, un premier mode de réalisation d'un dispositif de répartition de lumière voisin de l'invention ;
[Fig. 4B], et [Fig. 4C], illustrent de façon schématique une première variante du mode de réalisation de la figure 4A ;
[Fig. 4D] illustre de façon schématique une seconde variante du mode de réalisation de la figure 4A;
[Fig. 5] illustre de façon schématique, et selon une vue de côté, un deuxième mode de réalisation d'un dispositif de répartition de lumière voisin de l'invention ; et
[Fig. 6] illustre de façon schématique un système d'imagerie infrarouge selon l'invention.

### Description des modes de réalisation

Pour faciliter la lecture, on a représenté sur les figures les axes d'un repère orthonormé (Oxyz).

Dans tout le texte, le terme « infrarouge » se rapporte à une partie du spectre lumineux appartenant à une bande spectrale allant de 0,78 µm à 50 µm, plus préférentiellement de 2 µm à 12 µm.

Dans tout le texte, un guide d'onde planaire désigne un élément de guidage optique, apte à guider la propagation de la lumière par réflexions successives sur des faces planes parallèles entre elles (ici, il s'agit plus particulièrement d'un guidage réfractif). Dans un guide d'onde planaire, la lumière est confinée selon l'un des axes de l'espace à trois dimensions, et libre de se propager selon les deux autres axes de l'espace à trois dimensions. Formellement, un guide d'onde est constitué d'un coeur, dans lequel circule la lumière, et d'une gaine, assurant une différence d'indice optique souhaitée entre le coeur et un milieu entourant le coeur. Par abus de langage, le coeur peut être assimilé à un guide d'onde. Ici, un guide d'onde planaire désigne donc le coeur d'un guide d'onde planaire. Le guide d'onde planaire est constitué en pratique d'une pièce optique présentant une dimension réduite selon l'un des axes de l'espace à trois dimensions (ici l'axe (Oz) de l'épaisseur), et de grandes dimensions selon chacun des deux autres axes de l'espace à trois dimensions (ici les axes (Ox) et (Oy) de la longueur, respectivement la largeur). Le rapport entre l'épaisseur et la longueur, respectivement entre l'épaisseur et la largeur, est de préférence supérieur ou égal à 5, voire supérieur ou égal à 10. La pièce optique est constituée d'un matériau optiquement transparent aux longueurs d'onde à propager, par exemple avec un taux de transmission supérieur ou égal -3 dB/cm auxdites longueurs d'onde. Cette pièce optique est de préférence monolithique, formée d'un seul tenant. Elle présente avantageusement un indice optique homogène selon tout son volume, avec une composition chimique identique selon tout son volume.

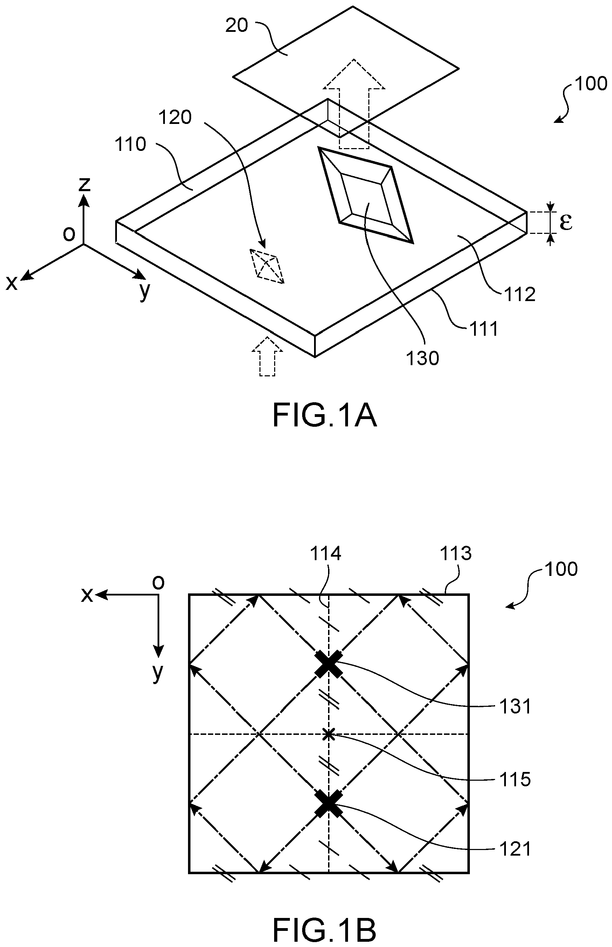

On décrit pour commencer un premier mode de réalisation d'un dispositif 100 de répartition de lumière selon l'invention. Ce dispositif 100 est illustré à la figure 1A, selon une vue en perspective. Il comporte un guide d'onde planaire 110, ici en forme de parallélépipède rectangle à base carrée. L'épaisseur ε du guide d'onde planaire est comprise de préférence entre 100 µm et 1.5 mm, de préférence entre 100 µm et 1.0 mm, par exemple égale à 725 µm. La longueur et la largeur du guide d'onde planaire 110 sont chacune comprises entre 5 mm et 20 mm, par exemple chacune sensiblement égales à 10 mm. Le guide d'onde planaire est délimité, le long de l'axe (Oz), par deux faces 111, 112 parallèles au plan (xOy), et nommées respectivement première et seconde face principale. Les première et seconde faces principales 111, 112 sont les faces du guide d'onde planaire de plus grande aire, ici de forme carrée.

Le guide d'onde planaire 110 est muni d'un renfoncement 120 et d'une ouverture traversante 130.

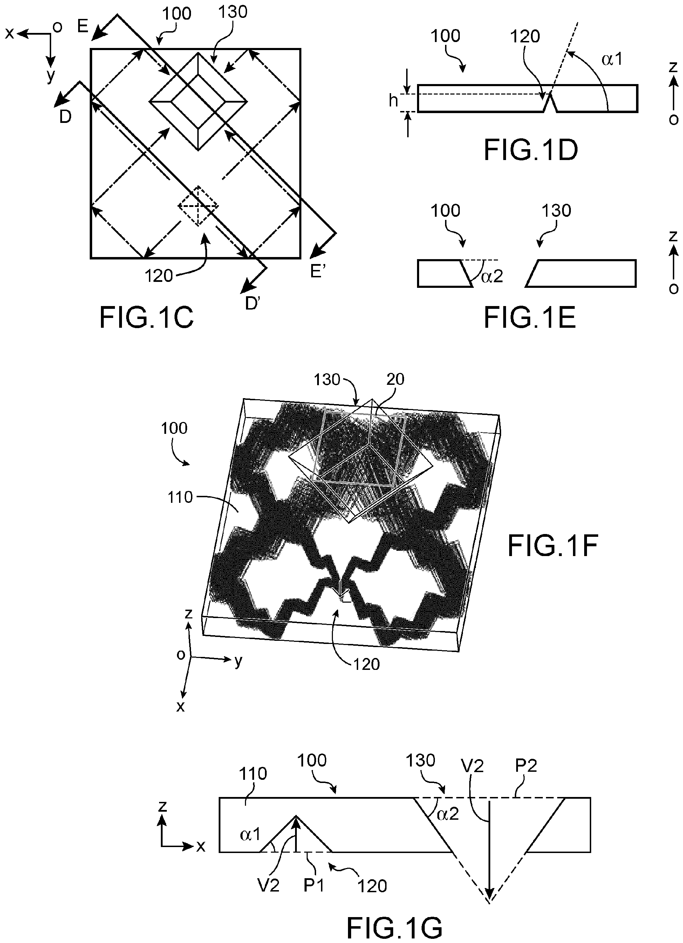

Le renfoncement 120 désigne une zone en creux, qui s'enfonce à l'intérieur du guide d'onde planaire 110 depuis l'une des faces principales, ici la première face principale 111. La hauteur h du renfoncement 120 est mesurée selon le même axe (Oz) que l'épaisseur ε du guide d'onde planaire (voir figure 1D). La hauteur h du renfoncement 120 est strictement inférieure à l'épaisseur ε du guide d'onde planaire, par exemple au moins deux fois inférieure. On a par exemple un renfoncement de profondeur 0.3 mm dans un guide d'onde planaire d'épaisseur 725 µm. Les dimensions du renfoncement selon les axes (Ox) et (Oy) diminuent au fur et à mesure que l'on s'éloigne de la première face principale 111. Le renfoncement 120 présente ici une forme de première pyramide, où la première pyramide est une pyramide droite à base carrée dont la base est parallèle au plan (xOy) de la face principale 111. Le renfoncement 120 définit ainsi quatre facettes inclinées dans le guide d'onde planaire, qui sont les faces triangulaires de la première pyramide.

L'ouverture traversante 130 désigne un trou qui traverse de part en part le guide d'onde planaire 110, de l'une à l'autre des faces principales 111 et 112. Les dimensions de l'ouverture traversante 130 selon les axes (Ox) et (Oy) augmentent au fur et à mesure que l'on s'éloigne de la première face principale 111 et que l'on s'approche de la face principale opposée 112. L'ouverture traversante 130 présente ici une forme de seconde pyramide tronquée, où la seconde pyramide est une pyramide droite à base carrée dont la base est parallèle au plan (xOy) des faces principales 111 et 112. L'ouverture traversante 130 définit ainsi quatre facettes inclinées dans le guide d'onde planaire, qui sont les faces trapézoïdales de la pyramide tronquée. Le plus grand diamètre de l'ouverture traversante est de préférence supérieur ou égal à 1 mm, par exemple 1,36 mm.

La première et la seconde pyramide, qui définissent respectivement la forme du renfoncement 120 et la forme de l'ouverture traversante 130, ont leurs bases respectives parallèles entre elles, et des orientations opposées. En d'autres termes, des vecteurs respectifs reliant la base à l'apex, pour chacune de ces deux pyramides, sont orientés dans deux sens opposés. Sur la figure 1G, on a représenté le dispositif 100 selon une vue en coupe dans un plan (xOz) passant par le renfoncement 120 et par l'ouverture traversante 130, et montrant en pointillés la première pyramide P1 et la seconde pyramide P2. Dans chaque pyramide P1 respectivement P2, on a représenté le vecteur V1 respectivement V2, parallèle à (Oz) et reliant la base à l'apex.

La première et la seconde pyramide ont des valeurs distinctes de l'angle à la base, où l'angle à la base est l'angle formé entre la base de la pyramide et chaque face triangulaire de cette dernière. L'angle à la base prend par exemple une valeur α1=54,74° pour la première pyramide P1 définissant la forme du renfoncement 120, et une valeur α2=45° pour la deuxième pyramide P2 définissant la forme de l'ouverture traversante 130.

En outre, la première et la seconde pyramide ont chacune leur base carrée tournée à 45°, dans un plan (xOy), relativement aux formes carrées des faces principales 111, 112 du guide d'onde planaire.

La figure 1B illustre de façon schématique le positionnement du renfoncement et de l'ouverture traversante dans le guide d'onde planaire. A la figure 1B, on a représenté le dispositif 100 selon une projection dans le plan de l'une des faces principales 111, 112 du guide d'onde planaire. La projection du guide d'onde planaire, dans ce plan, est un carré 113. Une première croix 121 symbolise la projection, dans ce plan, du centre géométrique du renfoncement. Une seconde croix 131 symbolise la projection, dans ce plan, du centre géométrique de l'ouverture traversante. Les deux croix 121, 131 sont situées toutes deux le long d'une ligne 114 (en pointillés) séparant le carré 113 en deux rectangles de mêmes dimensions. En outre, les deux croix 121, 131 sont situées chacune à une même distance du centre 115 du carré 113. Sur la figure 1B, les distances égales sont symbolisées avec un tiret incliné pour une première série de segments de même longueur, et deux tirets inclinés pour une seconde série de segments de même longueur. Ce positionnement du renfoncement et de l'ouverture traversante dans le guide d'onde planaire assure une même longueur cumulée de chemin optique pour tous les rayons lumineux circulant dans le guide d'onde planaire entre le renfoncement et l'ouverture traversante. On a représenté en trait mixte, de manière schématique, les chemins optiques suivis par chacun de ces rayons. Il existe donc une multitude de couples possibles de positions du renfoncement et de l'ouverture traversante sur le guide d'onde planaire 110. Les figures 1A et 1C à 1G illustrent plus particulièrement le cas où les centres respectifs du renfoncement 120 et de l'ouverture traversante 130 sont situés tous deux à même distance du centre 115 du guide d'onde planaire 110, selon une projection dans le plan de la face principale 111, respectivement 112.

La figure 1C illustre le dispositif 100 de la figure 1A, selon une vue de dessus. La figure 1C montre le renfoncement pyramidal 120 et l'ouverture traversante 130 en forme de pyramide tronquée au sommet.

La figure 1D illustre le dispositif 100 de la figure 1A, selon une vue en coupe dans un plan (DD') tel qu'indiqué sur la figure 1C, passant le renfoncement 120 et aligné avec une direction de propagation de la lumière dans le guide d'onde planaire (plan parallèle à (Oz) et incliné à 45° relativement à (Ox) et (Oy)).

La figure 1E illustre le dispositif 100 de la figure 1A, selon une vue en coupe dans un plan (EE') tel qu'indiqué sur la figure 1C, passant par l'ouverture traversante 130 et aligné avec une direction de propagation de la lumière dans le guide d'onde planaire (plan parallèle à (Oz) et incliné à 45° relativement à (Ox) et (Oy)).

En fonctionnement, le dispositif 100 est immergé dans un milieu environnant gazeux ou liquide, de préférence de l'air. Un faisceau lumineux d'injection arrive sur le dispositif 100, orienté de préférence selon un axe normal au plan (xOy) du guide d'onde planaire 110. De préférence, une intersection entre le faisceau lumineux d'injection et le dispositif 100 recouvre l'ensemble du renfoncement 120, ici chacune des facettes inclinées du renfoncement 120. En outre, un axe central du faisceau lumineux d'injection est de préférence aligné sur un axe central du renfoncement 120, ici un axe reliant l'apex et le centre de la base de la première pyramide P1. La lumière du faisceau lumineux d'injection pénètre à l'intérieur du guide d'onde planaire 110 au niveau du renfoncement 120, en étant réfractée au niveau de chacune des facettes inclinées définies par le renfoncement 120. Le renfoncement 120 forme ainsi une zone d'injection, pour l'injection de rayons lumineux dans le guide d'onde planaire 110. A l'intérieur du guide d'onde planaire 110, la lumière est séparée en autant de faisceaux principaux qu'il y a de facettes inclinées au niveau du renfoncement 120, ici quatre. Chacun de ces faisceaux principaux se propage à l'intérieur du guide d'onde planaire 110, du renfoncement 120 jusqu'à l'ouverture traversante 130, par réflexions successives sur les faces principales 111, 112 du guide d'onde planaire, et par deux réflexions sur deux faces latérales respectives du guide d'onde planaire. La lumière émerge de l'ouverture traversante 130, selon une pluralité d'orientations inclinées chacune en biais relativement au plan (xOy) du guide d'onde planaire 110. L'ouverture traversante 130 forme ainsi une zone d'extraction, pour l'extraction de rayons lumineux hors du guide d'onde planaire 110.

A la figure 1C, on a représenté en traits mixtes, de façon schématique, les trajets optiques suivis par chacun des quatre faisceaux principaux dans le guide d'onde planaire. Chacun des quatre faisceaux principaux se propage dans le guide d'onde planaire 110 jusqu'à l'une respective des facettes inclinées définies par l'ouverture traversante 130. Chacun des quatre faisceaux principaux émerge alors hors du guide d'onde planaire 110, en étant réfracté au niveau de l'une des facettes inclinées définies par l'ouverture traversante 130.

Les faisceaux principaux émergent du guide d'onde planaire du côté opposé au côté d'injection de la lumière dans le guide d'onde planaire, voir notamment figure 1A. En particulier, la lumière est injectée ici dans le guide d'onde planaire 110 du côté de la première face principale 111, et émerge hors de ce dernier du côté de la seconde face principale 112. Sur la figure 1A, on a illustré une surface 20 parallèle au plan (xOy), et située au regard de l'ouverture traversante 130 du côté où la lumière émerge du guide d'onde planaire 110. La surface 20 définit ici l'emplacement d'une scène à éclairer. Dans des variantes non représentées, la scène à éclairer s'étend dans le même plan que la face principale 112, au regard de l'ouverture traversante 130. La scène à éclairer 20 présente par exemple une largeur comprise entre 1 mm et 15 mm (plus grande distance entre deux points). Il s'agit ici d'un carré de 1.36 mm de côté. Les dimensions de la scène à éclairer sont sensiblement égales aux dimensions de l'ouverture traversante 130 au niveau de la face principale 111 (où l'ouverture traversante 130 est plus étroite).

La figure 1F illustre le résultat d'une simulation de tracé de rayons dans le dispositif de la figure 1A. On retrouve la séparation en quatre faisceaux principaux, à l'injection dans le guide d'onde planaire 110. Au fur et à mesure de leur propagation dans le guide d'onde planaire, chacun de ces faisceaux principaux s'étale dans des plans parallèles au plan (xOy). Afin de réceptionner la totalité ou presque de chacun desdits faisceaux principaux, le volume occupé par l'ouverture traversante 130 est bien supérieur au volume occupé par le renfoncement 120, par exemple au moins 10 fois supérieur. Les rayons émergent hors du guide d'onde planaire 130 au niveau des facettes inclinées définies par l'ouverture traversante 130. Grâce à la répartition de la lumière en quatre faisceaux principaux, et à l'étalement spatial lié à la propagation dans un guide d'onde planaire, la lumière émergeant du guide d'onde planaire 110 présente une répartition relativement homogène au niveau de la scène à éclairer 20. Sur la figure 1F, et pour des raisons techniques liées à la simulation de tracé de rayons, l'ouverture traversante 130 est représentée avec une profondeur selon (Oz) supérieur à l'épaisseur du guide d'onde planaire 110. Cela n'impacte pas les tracés de rayons.

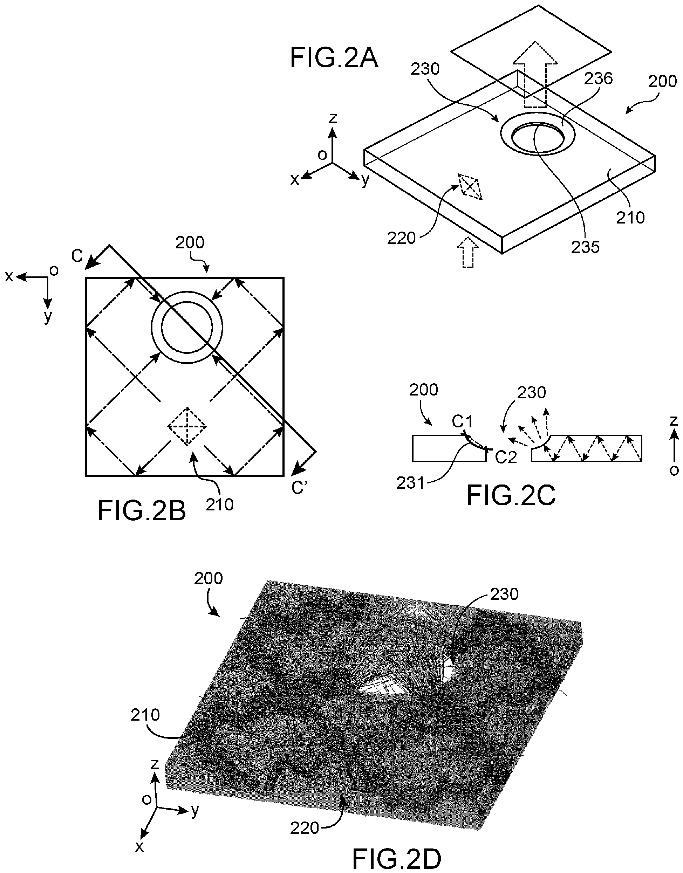

La figure 2A illustre de façon schématique, et selon une vue en perspective, un deuxième mode de réalisation d'un dispositif 200 de répartition de lumière selon l'invention. Le dispositif 200 ne sera décrit que pour ses différences relativement au premier mode de réalisation décrit ci-dessus.

Dans ce second mode de réalisation, l'ouverture traversante 230 est délimitée par une surface de révolution, qui présente une symétrie axiale autour d'un axe parallèle à l'axe (Oz). Une génératrice de cette surface comprend un segment incurvé, et peut comprendre en outre un segment droit. Dit autrement, l'ouverture traversante 230 a la forme d'un volume de révolution, invariant autour d'un axe parallèle à l'axe (Oz). Ce volume de révolution est défini par une génératrice. L'intersection entre cette génératrice et le guide d'onde planaire 210 correspond à la génératrice de la surface de révolution énoncée ci-dessus.

La figure 2B illustre le dispositif 200 de la figure 2A, selon une vue de dessus. On retrouve sur cette figure le renfoncement pyramidal 220, et l'ouverture traversante 230. Le renfoncement pyramidal 220 est similaire à celui du dispositif des figures 1A à 1G, ici avec les faces triangulaires de la pyramide inclinées à 54,74° relativement au plan (x0y).

La figure 2C illustre le dispositif 200 de la figure 2A, selon une vue en coupe dans un plan (CC') tel qu'indiqué sur la figure 2B, passant par l'ouverture traversante 230 et aligné avec une direction de propagation de la lumière dans le guide d'onde planaire (plan parallèle à (Oz) et incliné à 45° relativement à (Ox) et (Oy)). La figure 2C illustre notamment la génératrice 231 de la surface de révolution mentionnée ci-avant. La génératrice 231 comporte une portion courbe incurvée vers l'intérieur du guide d'onde planaire 210. Elle comporte ici en outre une portion droite parallèle à l'axe (Oz). La portion courbe est délimitée par deux points C1 et C2 reliés par un segment incliné ici à 45° relativement au plan du guide d'onde planaire. La génératrice 231 définit une surface de révolution, qui comporte une surface incurvée 236 associée à la portion courbe de la génératrice. Ici, la surface de révolution comporte en outre une surface 235 en forme de cylindre de révolution, associée à la portion droite de la génératrice 231 (voir figure 2A). La surface incurvée 236 agit comme une lentille concave dans des plans orthogonaux à l'axe (Oz), et fait ainsi diverger la lumière émergeant du guide d'onde planaire (voir figure 2C). L'homogénéité de la répartition de lumière en sortie du guide d'onde planaire 210 est donc encore améliorée.

La figure 2D illustre le résultat d'une simulation de tracé de rayons dans le dispositif de la figure 2A. On retrouve la séparation en quatre faisceaux principaux, à l'injection dans le guide d'onde planaire 210, et l'étalement spatial des faisceaux principaux lors de leur propagation dans le guide d'onde planaire, depuis le renfoncement 220 jusqu'à l'ouverture traversante 230. Les rayons lumineux émergent du guide d'onde planaire au niveau de la surface incurvée 236 de l'ouverture traversante 230, en étant dispersés par la surface incurvée 236 agissant comme une lentille divergente.

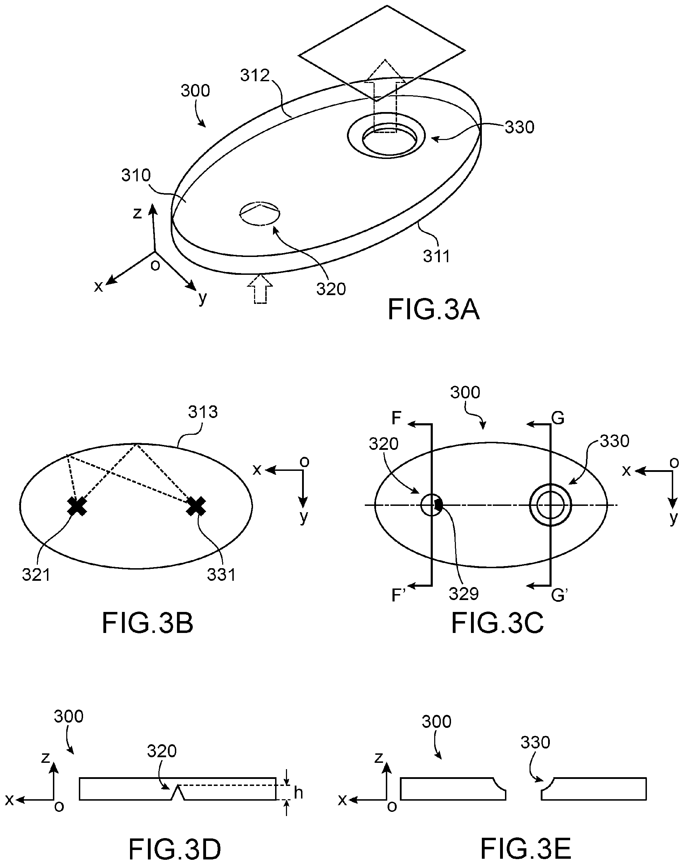

La figure 3A illustre de façon schématique, et selon une vue en perspective, un troisième mode de réalisation d'un dispositif 300 de répartition de lumière selon l'invention. Le dispositif 300 ne sera décrit que pour ses différences relativement au deuxième mode de réalisation décrit ci-dessus.

Dans ce mode de réalisation, le guide d'onde planaire 310 a une forme de cylindre droit. Les bases du cylindre forment les faces principales 311, 312 du guide d'onde planaire, et présentent chacune une forme d'ellipse. Chacune des ellipses est munie de deux foyers.

La figure 3B illustre de façon schématique le positionnement du renfoncement 320 et de l'ouverture traversante 330 dans le guide d'onde planaire 310. A la figure 3B, on a représenté le dispositif 300 selon une projection dans le plan de l'une des faces principales 311, 312. Une première croix 321 symbolise la projection, dans ce plan, du centre géométrique du renfoncement 320. Une seconde croix 331 symbolise la projection, dans ce plan, du centre géométrique de l'ouverture traversante 330. La projection du guide d'onde planaire 310 dans ce plan a la forme d'une ellipse 313. Les deux croix 321, 331 sont situées chacune sur l'un respectif des foyers de l'ellipse 313. Une ellipse peut être définie comme l'ensemble des points dont la somme des distances à deux points fixes, dits foyers, est constante. Ce positionnement du renfoncement et de l'ouverture traversante assure donc une même longueur cumulée de chemin optique, pour tous les rayons lumineux circulant dans le guide d'onde planaire entre le renfoncement et l'ouverture traversante. La figure 3B illustre en traits pointillés le chemin optique parcouru par la lumière dans le guide d'onde planaire 310, pour deux orientations initiales de la lumière à l'injection.

Dans ce mode de réalisation, le renfoncement 320 a une forme de cône de révolution, entier ou légèrement tronqué au sommet. La pointe du cône se trouve du côté de la face principale 312 du guide d'onde planaire 310, tandis que la base du cône se trouve du côté de l'autre face principale 311 du guide d'onde planaire 310.

L'ouverture traversante 330 est similaire à l'ouverture traversante décrite en référence aux figures 2A et 2B.

La figure 3C illustre le dispositif 300 de la figure 3A, selon une vue de dessus. On retrouve sur cette figure le renfoncement conique 320 et l'ouverture traversante 330.

La figure 3D illustre le dispositif 300 de la figure 3A, selon une vue en coupe dans un plan (FF') tel qu'indiqué sur la figure 3C, parallèle au plan (yOz) et passant par le renfoncement conique 320. Comme dans les modes de réalisation décrits ci-avant, la hauteur h du renfoncement 320 est strictement inférieure à l'épaisseur du guide d'onde planaire, par exemple au moins deux fois inférieure.

La figure 3E illustre le dispositif 300 de la figure 3A, selon une vue en coupe dans un plan (GG') tel qu'indiqué sur la figure 3C, parallèle au plan (yOz) et passant par l'ouverture traversante 330. La figure 3E est ici identique à la figure 2C, la forme de l'ouverture traversante étant identique dans les deuxième et troisième modes de réalisation de l'invention.

En fonctionnement, et comme dans les premier et second modes de réalisation, un faisceau lumineux d'injection arrive sur le dispositif 300, du côté de la première face principale 311. De préférence, le faisceau lumineux d'injection est orienté selon un axe normal au plan du guide d'onde planaire, avantageusement aligné sur un axe central du renfoncement 320 (ici un axe reliant la pointe et le centre de la base du cône). La lumière dudit faisceau est injectée dans le guide d'onde planaire, et émerge ensuite hors du guide d'onde planaire du côté de la seconde face principale 312. Comme dans les premier et second modes de réalisation, la lumière se propage dans le guide d'onde planaire 310, depuis le renfoncement 320 jusqu'à l'ouverture traversante 330. Dans ce mode de réalisation, la lumière est répartie de manière homogène à 360° autour du centre du renfoncement 320, à l'injection dans le guide d'onde planaire 310. A l'extraction, la symétrie circulaire de l'ouverture traversante permet de conserver cette répartition homogène, cette fois sur 360° autour du centre de l'ouverture circulaire 330. Ce mode de réalisation offre donc une homogénéité radiale optimale de la répartition de lumière en sortie du dispositif selon l'invention.

Comme dans les premier et second modes de réalisation, le volume occupé par l'ouverture traversante 330 est bien supérieur au volume occupé par le renfoncement 320, par exemple au moins 10 fois supérieur.

En fonctionnement, chaque rayon lumineux circule dans le guide d'onde planaire, depuis le renfoncement 320 jusqu'à l'ouverture traversante 330, par réflexions multiples sur les faces principales du guide d'onde planaire, et par une unique réflexion sur la face latérale de ce dernier. De manière avantageuse, le dispositif 300 comporte un élément 329 pour empêcher que des rayons lumineux circulent directement du renfoncement 320 jusqu'à l'ouverture traversante 330, sans réflexion sur la face latérale du guide d'onde planaire (voir figure 3C). L'élément 329 est apte à bloquer (absorption) ou dévier (par réflexion ou réfraction) des rayons lumineux qui sinon se propageraient en ligne droite du renfoncement 320 jusqu'à l'ouverture traversante 330. L'élément 329 peut être constitué d'un revêtement non transmissif (absorbant ou réfléchissant), recouvrant une partie de la surface latérale du renfoncement 320 du côté de l'ouverture traversante. En variante, l'élément 329 peut être constitué d'un filtre spatial, de préférence en forme de secteur angulaire, qui s'étend dans un plan parallèle au plan du guide d'onde planaire au regard du renfoncement 320 et empêche une partie d'un faisceau lumineux d'injection d'atteindre le renfoncement 320. Selon une autre variante, l'élément 329 peut être constitué d'une zone pleine, située à l'intérieur du renfoncement 320 du côté de l'ouverture traversante. La zone pleine peut être opaque, ou réfléchissante, ou même transparente aux longueurs d'onde d'utilisation du dispositif 300 (déviation des rayons par réfraction). Un ensemble formé par le renfoncement 320 et l'élément 329 à l'intérieur de ce dernier a la forme d'une portion de cône de révolution, définie par un angle de rotation d'au moins 240°.

Selon une variante non représentée du mode de réalisation des figures 3A à 3E, l'ouverture traversante a une forme de cône de révolution tronqué au sommet. Un axe de symétrie du cône de révolution s'étend selon (Oz), en passant par l'un des foyers de l'ellipse, au niveau de chacune des faces principales du guide d'onde planaire. Les cônes de révolution définissant respectivement la forme du renfoncement et la forme de l'ouverture traversante sont orientés dans des directions opposées.

Dans chacun des modes de réalisation, le dispositif de répartition de lumière selon l'invention offre une solution pour répartir la lumière sur une scène à éclairer, avec un éclairage en biais. En particulier, la scène à éclairer est parallèle au guide d'onde planaire, et la lumière émerge de l'ouverture traversante en étant inclinée en biais relativement au guide d'onde planaire.

Le dispositif selon l'invention présente peu de pertes, ainsi qu'une bonne tenue au flux (notamment en comparaison avec un dispositif de répartition de lumière à base de fibre optique). Il présente également une grande compacité, et en particulier une épaisseur réduite lui permettant de servir d'entretoise entre l'échantillon et le module de détection dans le système optique d'imagerie sans lentille décrit en introduction.

Dans chacun des modes de réalisation, le dispositif de répartition de lumière selon l'invention reçoit de la lumière provenant d'un premier demi-espace, et projette de la lumière en direction d'un second demi-espace. Les deux demi-espaces sont séparés par un plan parallèle aux faces principales du guide d'onde planaire, et passant à mi-hauteur dans le guide d'onde planaire.

On décrit dans la suite un dispositif de répartition de lumière voisin de l'invention, configuré pour, en utilisation, répartir sur une scène à éclairer des rayons lumineux provenant d'une source lumineuse annexe, et qui comporte :
- un guide d'onde planaire, dont deux faces de plus grande étendue sont parallèles entre elles et forment chacune une face principale respective du guide d'onde planaire ; et
- une facette d'entrée, inclinée en biais relativement aux plans des faces principales du guide d'onde planaire, selon un premier angle d'inclinaison β1, et formant une zone d'injection pour l'injection de rayons lumineux dans le dispositif de répartition de lumière ; et
- une surface d'extraction, située dans le guide d'onde planaire, et formant une zone d'extraction pour l'extraction de rayons lumineux hors du guide d'onde planaire, avec la surface d'extraction et la facette d'entrée non parallèles entre elles.

La facette d'entrée peut s'étendre directement dans le guide d'onde planaire. En variante, la facette d'entrée peut être formée dans un substrat d'injection distinct du guide d'onde planaire. Le substrat d'injection est alors accolé contre le guide d'onde planaire, en contact optique avec ce dernier de sorte que des rayons lumineux ne soient pas réfléchis ou diffusés au niveau d'une interface entre le substrat d'injection et le guide d'onde planaire. A la fabrication, deux substrats peuvent être accolés ensemble par direct bonding (procédé mettant en oeuvre les forces de Van der Waals). L'un des substrats peut être aminci avant la gravure, et former le substrat d'injection, tandis que l'autre substrat forme le guide d'onde planaire. Le cas échéant, chacun des substrats est adapté à une valeur distincte d'un angle de gravure anisotropique.

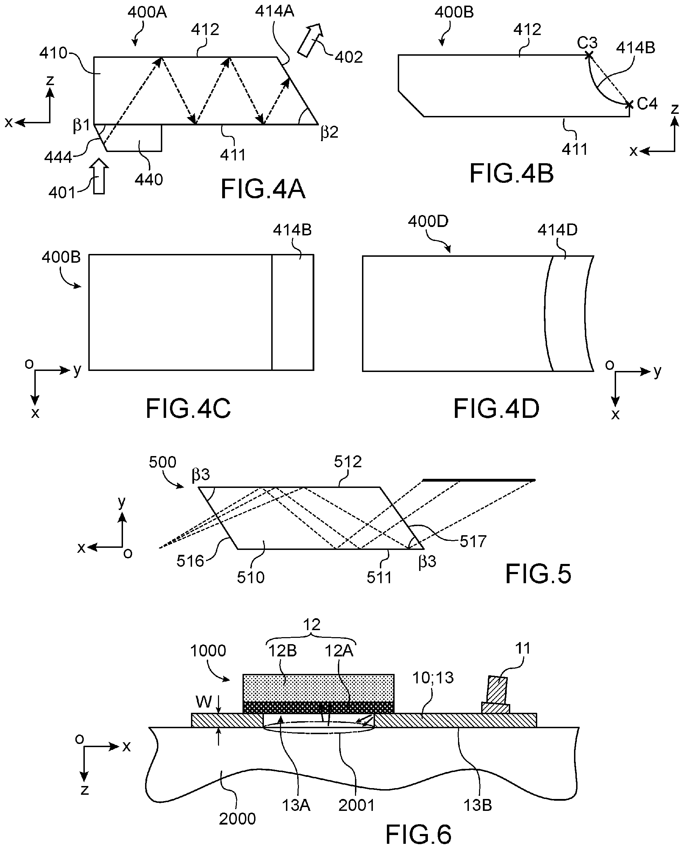

Un exemple d'un tel dispositif 400A est illustré en figure 4A. Le dispositif 400A de la figure 4A comporte un guide d'onde planaire 410, avec deux faces principales 411, 412 parallèles au plan (xOy), et un substrat 440 nommé substrat d'injection.

Le guide d'onde planaire 410 comporte une surface d'extraction 414A, formée ici par une face plane transverse du guide d'onde planaire. La surface d'extraction 414A s'étend en biais entre les deux faces principales 411, 412 du guide d'onde planaire, c'est-à-dire ni parallèle ni orthogonale à ces deux faces. La surface d'extraction 414A est inclinée ici d'un angle β2, relativement aux faces principales 411, 412. On a par exemple β2=45°.

Le substrat d'injection 440 est accolé contre l'une des faces principales du guide d'onde planaire, du côté du guide d'onde 410 opposé au côté de la surface d'extraction 414A. Il présente une facette d'entrée 444, inclinée en biais relativement aux faces principales du guide d'onde planaire, selon un angle d'inclinaison β1. On a ici β1=54,74°. En tout état de cause, β1 est différent de β2. Avantageusement, les angles β1 et β2 correspondent à des angles de gravure anisotropique dans un cristal de même nature.

Ici, le substrat d'injection 440 comporte également deux grandes faces, parallèles aux faces principales du guide d'onde planaire. Il présente avantageusement une épaisseur bien inférieure à celle du guide d'onde planaire 410, par exemple au moins deux fois inférieure. Le substrat d'injection 440 est avantageusement constitué d'un cristal de même nature que le guide d'onde planaire 410.

En fonctionnement, la lumière pénètre à l'intérieur du dispositif 400A par la facette d'entrée 444, en étant réfractée. La lumière traverse le substrat d'injection 440, et pénètre dans le guide d'onde planaire 410 au niveau de sa première face principale 411. Elle se propage ensuite dans le guide d'onde planaire 410 par réflexions successives sur ses faces principales 411, 412, puis émerge hors du guide d'onde planaire 410 par la surface d'extraction 414, en étant réfractée. La facette d'entrée 444 forme donc une zone d'injection, et la surface d'extraction 414 une zone d'extraction. A la figure 4A, on a représenté en traits pointillés le trajet de la lumière à l'intérieur du dispositif 400A. Deux flèches épaisses 401, 402 symbolisent le faisceau lumineux injecté dans, respectivement extrait hors du dispositif 400A. La propagation de la lumière dans le guide d'onde planaire 410 réalise un étalement spatial de la lumière, pour une meilleure répartition spatiale de la lumière en sortie du dispositif 400A.

Ce mode de réalisation permet de réaliser un éclairage en biais à partir d'un faisceau lumineux arrivant sur le dispositif 400A orienté selon un axe normal aux faces principales 411, 412 du guide d'onde planaire, respectivement selon un axe parallèle auxdites faces (par exemple pour β1=54,74° et β2=45°, respectivement pour β1=45° et β2=54,74°).

En variante, la surface d'extraction 414 peut former une zone d'injection et la facette d'entrée 444 une zone d'extraction, pour obtenir un éclairage normal à partir d'une injection en biais.

Dans l'exemple de la figure 4A, la surface d'extraction est une surface plane, et la facette d'entrée appartient à un substrat d'injection distinct du guide d'onde planaire.

En variante, la surface d'extraction est une surface incurvée.

En complément ou en variante, la facette d'entrée appartient au guide d'onde planaire. De manière avantageuse, la surface d'extraction est une surface incurvée, et la facette d'entrée appartient au guide d'onde planaire. En effet, lorsque la surface d'extraction est incurvée, elle n'est pas réalisée par gravure anisotropique de sorte que la réalisation de la facette d'entrée sur un substrat distinct présente moins d'intérêt.

La surface d'extraction peut être une surface incurvée dans des plans (x0z) et droite selon l'axe (Oy), où l'axe (Oy) est parallèle aux faces principales 411, 412 du guide d'onde planaire. Un exemple d'une telle variante est illustré par le dispositif 400B des figures 4B et 4C. Dans cette variante, la surface d'extraction 414B agit comme une lentille divergente, pour faire diverger la lumière émergeant du guide d'onde planaire dans des plans orthogonaux à l'axe (0y). La surface d'extraction 414B est délimitée par deux points C3 et C4, reliés par un segment incliné ici à 45° relativement au plan du guide d'onde planaire.

Selon une autre variante, la surface d'extraction est incurvée selon les trois dimensions de l'espace, pour faire diverger la lumière émergeant du guide d'onde planaire dans toutes les dimensions de l'espace à trois dimensions. Un exemple d'une telle variante est illustré par le dispositif 400D de la figure 4D et par la surface d'extraction 414D. Dans une vue en coupe dans un plan (xOz), la surface d'extraction 414D est identique à la surface d'extraction 414B de la figure 4B. Dans une vue de dessus selon un plan (xOy), la surface d'extraction 414D est incurvée, et non plus droite.

On décrit également un dispositif de répartition de lumière voisin de l'invention configuré pour, en utilisation, répartir sur une scène à éclairer des rayons lumineux provenant d'une source lumineuse annexe, et qui comporte un guide d'onde planaire, dont deux faces de plus grande étendue sont parallèles entre elles et forment chacune une face principale respective du guide d'onde planaire, où le guide d'onde planaire comporte également deux faces transverses parallèles entre elles, orientées en biais relativement aux faces principales, et formant respectivement une zone d'injection pour l'injection de rayons lumineux dans le dispositif de répartition de lumière, et une zone d'extraction pour l'extraction de rayons lumineux hors du guide d'onde planaire. Un exemple d'un tel dispositif 500 est illustré en figure 5. Le guide d'onde planaire 510 comporte deux faces principales 511, 512 parallèles au plan (xOy), et deux faces transverses 516, 517 parallèles entre elles et inclinées en biais relativement aux faces principales 511, 512. Les faces transverses 516, 517 sont inclinées ici d'un angle β3 relativement aux faces principales 516, 517. On a par exemple β3=54,74°. En fonctionnement, la lumière pénètre dans le guide d'onde planaire 510 au niveau de la face transverse 516, puis se propage dans le guide d'onde planaire 510 par réflexions successives sur ses faces principales 511, 512, et enfin émerge du guide d'onde planaire par la face transverse opposée 517. La face transverse 516 forment ainsi une zone d'injection, tandis que la face transverse opposée 517 forme une zone d'extraction. La propagation dans le guide d'onde planaire 510 réalise un étalement spatial de la lumière dans le plan (xOy) du guide d'onde planaire.

La figure 6 illustre un système d'imagerie infrarouge 1000, qui comporte un dispositif de répartition de lumière 10 selon l'invention, ainsi qu'une source lumineuse infrarouge 11, un module de détection 12 (ou module d'imagerie), et un élément d'espacement 13.

La source lumineuse infrarouge 11 est configurée pour émettre au moins un faisceau lumineux à une longueur d'onde infrarouge. La source lumineuse infrarouge 11 peut comprendre une ou plusieurs sources élémentaires, parmi :
- au moins une source laser, telle qu'un laser à cascade quantique (QCL), un laser à cascade interbande (ICL), un laser à cavité externe ou interne ;
- au moins une LED ;
- au moins une source à corps noir, etc.

Un diaphragme, non représenté, peut être agencé en sortie de la source lumineuse infrarouge 11 pour couper des rayons trop inclinés relativement à l'axe d'émission.

Le module de détection 12 comprend un détecteur infrarouge matriciel 12A sensible dans l'infrarouge et plus particulièrement aux longueurs d'onde d'utilisation du dispositif 300 de répartition de lumière 10. Le détecteur infrarouge matriciel 12A comprend par exemple une matrice de photodiodes à semi-conducteurs ou une matrice de bolomètres. Il s'étend selon une surface carrée ou rectangulaire, de côté compris de préférence entre 1 mm et 10 mm. Elle s'étend ici dans un plan (xOy). Le module de détection 12 comprend en outre un circuit de lecture 12B, pour la lecture de signaux électriques fournis par le détecteur infrarouge matriciel 12A.

L'élément d'espacement 13, ou entretoise, est monté solidaire du module de détection 12, du côté du détecteur infrarouge matriciel 12A. Il comporte une ouverture traversante 13A, au regard du détecteur infrarouge matriciel 12A, et une surface d'appui 13B, du côté opposé au module de détection 12 et destinée à venir au contact d'un échantillon à analyser. La surface d'appui 13B s'étend ici dans un plan parallèle au plan (xOy), parallèle au plan du détecteur infrarouge matriciel 12A. L'élément d'espacement 13 présente une épaisseur W, mesurée selon l'axe (Oz). En fonctionnement, la surface d'appui 13B est appuyée contre un échantillon 2000. Une région de l'échantillon 2000 située au regard de l'ouverture traversante 13A forme une scène à éclairer 2001. L'élément d'espacement 13 garantit une distance fixe prédéterminée entre la scène à éclairer 2001 et le détecteur infrarouge matriciel 12A, nommée distance de travail. La distance de travail est comprise de préférence entre 100 µm et 1,5 mm. L'élément d'espacement fixe également l'étendue de la scène à éclairer 2001, délimitée par les bords de l'ouverture traversante 13A. Le diamètre de l'ouverture traversante 13A est avantageusement du même ordre de grandeur que celui du détecteur infrarouge matriciel 12A.

Le dispositif de répartition de lumière 10 est configuré pour recevoir en entrée la lumière provenant de la source lumineuse infrarouge 11, et pour répartir cette lumière sur la scène à éclairer 2001.

Le dispositif de répartition de lumière 10 est confondu ici avec l'élément d'espacement 13. Le dispositif 10 comporte en particulier :
- un guide d'onde planaire, d'épaisseur W ;
- une ouverture traversante formant une zone d'extraction, confondue ici avec l'ouverture traversante 13A dans l'élément d'espacement 13 ; et
- un renfoncement, non représenté, formant une zone d'injection, et au niveau duquel se trouve la source lumineuse infrarouge 11.

La source lumineuse infrarouge 11 se trouve ici sur l'élément d'espacement 13 formant également le dispositif de répartition de lumière 10, du côté opposé à la surface d'appui 13B.

Dans des variantes non représentées, le dispositif de répartition de lumière 10 ne forme qu'une partie seulement de l'élément d'espacement 13. Par exemple, l'élément d'espacement 13 peut être formé par la superposition du dispositif de répartition de lumière 10 et d'une cale supplémentaire, où la cale supplémentaire est munie d'une ouverture traversante alignée avec l'ouverture traversante du dispositif de répartition de lumière 10. En tout état de cause, la faible épaisseur du dispositif de répartition de lumière selon l'invention, comprise avantageusement entre 100 µm et 1,5 mm, lui permet de former tout ou partie de l'élément d'espacement 13.

On peut considérer que le module de détection 12 et l'élément d'espacement 13 forment ensemble un système d'imagerie sans lentille, apte à acquérir une image de la scène à éclairer, sans optique réfractive de formation d'image (hormis éventuellement une matrice de microlentilles en amont du détecteur infrarouge matriciel 12A). Les images obtenues sont des images large champ, en réflexion.

Le système d'imagerie infrarouge 1000 est avantageusement formé dans une puce photonique.

On remarque que le système tel qu'illustré en figure 6 peut être combiné avec l'un ou l'autre des modes de réalisation voisins de l'invention décrits ci-avant.

Dans les différents modes de réalisation de l'invention, et les différents modes de réalisation voisins de l'invention, le guide d'onde planaire est de préférence en silicium cristallin.

Les interfaces dans le guide d'onde planaire, formant la zone d'injection et la zone d'extraction, peuvent chacune être réalisées à l'aide de l'un au moins parmi les procédés suivants :
1/ Procédé de fabrication standard, dans lequel la zone d'injection et/ou la zone d'extraction sont/est réalisée(s) en gravant directement un substrat initial en silicium.
2/ Procédé de fabrication standard alternatif, dans lequel la zone d'injection et/ou la zone d'extraction sont/est réalisée(s) en gravant directement un substrat initial, où le substrat initial est constitué d'un matériau cristallin transparent dans l'infrarouge et distinct du silicium, par exemple du germanium cristallin, du sulfure de zinc cristallin, du chlorure de baryum cristallin, du fluorure de baryum cristallin, etc.
3/ Procédé de fabrication par moulage et emboutissage, dans lequel on fabrique un modèle de dispositif de répartition de lumière en silicium cristallin, par un procédé de fabrication standard tel que mentionné au point 1/. Le modèle est ensuite répliqué dans un matériau annexe pas forcément cristallin. Le matériau annexe présente avantageusement de meilleures propriétés de transparence dans l'infrarouge que le silicium cristallin. Il peut s'agir de verres de chalcogénure. La réplication peut mettre en oeuvre un procédé de moulage et emboutissage.
4/ Procédé de fabrication alternatif par moulage et emboutissage, dans lequel on fabrique directement un moule en silicium cristallin, par un procédé de fabrication standard tel que mentionné au point 1/. Le dispositif de répartition de lumière est réalisé par emboutissage à l'aide de ce moule, et constitué d'un matériau annexe tel que celui mentionné au point 3/ ci-dessus.

Le procédé de fabrication standard mentionné au point 1/ peut mettre en oeuvre une gravure anisotropique sur des plans cristallins. La gravure anisotropique comprend un masquage des zones à préserver, et un bain dans une solution comportant un agent d'attaque anisotropique. L'agent d'attaque comprend par exemple de la potasse (KOH), ou de l'éthylène diamine pyrocathécol (EDP). L'agent d'attaque présente des directions d'attaque préférentielles, liées au réseau cristallin (réseau type cubique faces centrées, dans le cas du silicium). La gravure anisotropique sur des plans cristallins permet de graver, dans un substrat comportant deux grandes faces parallèles entre elles, au moins une surface plane inclinée d'un angle γ relativement aux grandes faces. La valeur de y est fonction de la maille cristalline du substrat et de la direction d'attaque privilégiée. Pour un substrat cristallin en silicium, on a en particulier γ=45° ou γ=54,74°.

En variante, le procédé de fabrication standard mentionné au point 1/ peut mettre en oeuvre une gravure isotropique, permettant de graver des surfaces courbées concaves dans un substrat.

L'invention se rapporte donc à un dispositif formant une structure d'extraction passive, avantageusement couplée à un ou plusieurs lasers à cascade quantique, et pour une utilisation à très courte distance de travail. Le dispositif selon l'invention présente de préférence une pupille d'entrée plus petite que la pupille de sortie. Il est avantageusement adapté à une injection de la lumière selon un axe normal au plan du guide d'onde planaire. De préférence, tous les rayons lumineux émergeant du dispositif selon l'invention ont parcouru un chemin de même longueur cumulée dans le guide d'onde planaire.

L'invention permet de répartir la lumière d'un faisceau lumineux infrarouge, appartenant de préférence à la gamme spectrale allant de 2 µm à 12 µm. Elle trouve une application notamment dans le domaine de l'imagerie active multispectrale et de l'imagerie active hyperspectrale, pour obtenir des informations biochimiques facilement et rapidement. On peut notamment déterminer la composition chimique d'un échantillon à partir de sa signature d'absorption lumineuse dans l'infrarouge.

L'invention n'est pas limitée aux exemples détaillés ci-avant, et de nombreux autres exemples peuvent être mis en oeuvre sans sortir du cadre de l'invention. Par exemple, le renfoncement et/ou l'ouverture traversante peuvent/peut être rempli(s) par un matériau solide transparent dans l'infrarouge, offrant une différence d'indice optique suffisante avec le matériau du guide d'onde planaire.

Dans l'invention (ainsi que dans les modes de réalisation voisins de l'invention), le guide d'onde planaire est de préférence en silicium. L'invention n'est cependant pas limitée à ce matériau, le guide d'onde planaire pouvant être constitué de tout autre matériau présentant au moins une fenêtre de transparence dans l'infrarouge, par exemple du germanium, du sulfure de zinc, du chlorure de baryum, du fluorure de baryum, etc. Pour une utilisation à des longueurs d'onde supérieures à 10 µm, le guide d'onde planaire est avantageusement constitué de germanium cristallin, qui présente alors une absorption inférieure à celle du silicium. Lorsque le matériau cristallin présente une maille distincte de celle du silicium, la gravure anisotropique donne accès à d'autres valeurs d'angle de gravure.

Un diaphragme à niveaux de gris peut être disposé en amont du dispositif de répartition de lumière selon l'invention, pour homogénéiser l'éclairement sur la scène à éclairer.

## Revendications

1. Dispositif de répartition de lumière (100 ; 200 ; 300 ; 10) configuré pour, en utilisation, répartir sur une scène à éclairer (20 ; 2001) des rayons lumineux provenant d'une source lumineuse annexe, **caractérisé en ce qu'**il comporte :
- un guide d'onde planaire (110 ; 210; 310), dont deux faces (111, 112 ; 311, 312) de plus grande étendue sont parallèles entre elles et forment chacune une face principale respective du guide d'onde planaire ;
- un renfoncement (120 ; 220 ; 320), qui s'étend dans le guide d'onde planaire depuis l'une des faces principales, et qui forme une zone d'injection configurée pour réaliser l'injection de rayons lumineux dans le guide d'onde planaire ; et
- une ouverture traversante (130 ; 230 ; 330), qui s'étend dans le guide d'onde planaire de l'une à l'autre de ses faces principales, et qui forme une zone d'extraction configurée pour réaliser l'extraction hors du guide d'onde planaire, des rayons lumineux injectés dans la zone d'injection et ayant circulé dans le guide d'onde planaire.

2. Dispositif (100 ; 200) selon la revendication 1, **caractérisé en ce que** :
- le guide d'onde planaire (110; 210) a ses deux faces principales (111, 112) chacune en forme de carré et présente une forme de parallélépipède rectangle, et
- dans une projection du dispositif de répartition de lumière (100 ; 200) dans le plan de l'une des faces principales (111; 112) du guide d'onde planaire, le renfoncement (120 ; 220) et l'ouverture traversante (13 ; 230) sont centrés chacun sur une ligne séparant ladite face principale en deux rectangles de mêmes dimensions, avec les centres respectifs (121, 131) du renfoncement et de l'ouverture traversante situés chacun à une même distance du centre de ladite face principale.

3. Dispositif (100; 200) selon la revendication 2, **caractérisé en ce que** le renfoncement (120; 220) a une forme de première pyramide, où ladite première pyramide est une pyramide droite à base carrée.

4. Dispositif (100) selon la revendication 3, **caractérisé en ce que** l'ouverture traversante (130) a une forme de seconde pyramide tronquée au sommet, où ladite seconde pyramide est une pyramide droite à base carrée.

5. Dispositif (100) selon la revendication 4, **caractérisé en ce que** la première pyramide et la seconde pyramide ont leurs bases respectives parallèles aux faces principales du guide d'onde planaire, et sont orientées selon deux sens opposés.

6. Dispositif (200) selon la revendication 3, **caractérisé en ce que** l'ouverture traversante (230) a une forme de volume de révolution, invariant autour d'un axe orthogonal aux faces principales du guide d'onde planaire (210), et **en ce que** l'intersection entre le guide d'onde planaire et une génératrice dudit volume de révolution comprend un segment courbe (231).

7. Dispositif (300) selon la revendication 1, **caractérisé en ce que** :
- le guide d'onde planaire (310) a ses deux faces principales (311, 312) chacune en forme d'ellipse et présente une forme de cylindre droit à base elliptique,
- chaque face principale (311, 312) en forme d'ellipse est munie de deux foyers (321, 331), et
- dans une projection du dispositif de répartition de lumière (300) dans le plan de l'une des faces principales (311, 312) du guide d'onde planaire, le renfoncement (320) et l'ouverture traversante (330) sont centrés chacun sur l'un respectif desdits foyers (321, 331).

8. Dispositif (300) selon la revendication 7, **caractérisé en ce que** le renfoncement (320) a une forme de cône de révolution entier ou tronqué au sommet.

9. Dispositif (300) selon la revendication 7 ou 8, **caractérisé en ce que** l'ouverture traversante (330) a une forme de volume de révolution, invariant autour d'un axe orthogonal aux faces principales (311, 312) du guide d'onde planaire, et **en ce que** l'intersection entre le guide d'onde planaire (310) et une génératrice dudit volume de révolution comprend un segment courbe.

10. Dispositif (100 ; 200; 300; 10) selon l'une quelconque des revendications 1 à 9, **caractérisé en ce que** le guide d'onde planaire (110; 210; 310) est transparent dans l'infrarouge.

11. Dispositif (100 ; 200 ; 300 ; 10) selon l'une quelconque des revendications 1 à 10, **caractérisé en ce que** :
- le renfoncement (120 ; 220 ; 320) est configuré pour réaliser l'injection, dans le guide d'onde planaire (110; 210; 310), de rayons lumineux provenant d'un demi-espace supérieur ; et
- l'ouverture traversante (130 ; 230 ; 330) est configurée pour réaliser l'extraction de rayons lumineux, hors du guide d'onde planaire (110; 210; 310), et vers un demi-espace inférieur ;
où les demi-espaces inférieur et supérieur forment ensemble un espace à trois dimensions, et s'étendent chacun d'un côté respectif d'un plan parallèle aux faces principales (111, 112 ; 311, 312) du guide d'onde planaire et passant à mi-hauteur dans le guide d'onde planaire.

12. Système d'imagerie infrarouge (1000) **caractérisé en ce qu'**il comporte :
- un dispositif de répartition de lumière (10) selon l'une quelconque des revendications 1 à 11, configuré pour, en utilisation, répartir sur une scène à éclairer (2001) des rayons lumineux provenant d'une source lumineuse annexe ; et
- un module de détection (12), comportant un détecteur infrarouge matriciel (12A) configuré pour recevoir des rayons lumineux renvoyés par la scène à éclairer (2001) ; avec le détecteur infrarouge matriciel (12A) situé au regard de l'ouverture traversante (130 ; 230 ; 330) du dispositif de répartition de lumière (10).

13. Système (1000) selon la revendication 12, **caractérisé en ce qu'**il comporte en outre une source lumineuse infrarouge (11) formant la source lumineuse annexe, et dans lequel le dispositif de répartition de lumière (10) est configuré pour, en utilisation, recevoir en entrée des rayons lumineux provenant de ladite source lumineuse infrarouge et répartir ces rayons sur la scène à éclairer, avec l'entrée du dispositif de répartition de lumière formée par le renfoncement (120; 220; 320) du dispositif de répartition de lumière (10).

14. Système (1000) selon la revendication 12 ou 13, **caractérisé en ce qu'**il comporte un élément d'espacement (13), monté solidaire du module de détection (12), et comportant une surface d'appui (13B) et une ouverture traversante (13A), avec la surface d'appui (13B) située d'un côté de l'élément d'espacement (13) opposé au module de détection (12), et avec l'ouverture traversante (13A) située au regard du détecteur infrarouge matriciel (12A), et **en ce que** le dispositif de répartition de lumière (10) forme tout ou partie de l'élément d'espacement (13).

## Patentansprüche

1. Lichtverteilungsvorrichtung (100; 200; 300; 10), die dazu konfiguriert ist, im Gebrauch Lichtstrahlen von einer zusätzlichen Lichtquelle auf eine zu beleuchtende Szene (20; 2001) zu verteilen, **dadurch gekennzeichnet, dass** sie Folgendes aufweist:
- einen planaren Wellenleiter (110; 210; 310), dessen zwei Flächen (111, 112; 311, 312) mit größerer Ausdehnung parallel zueinander sind und jeweils eine jeweilige Hauptfläche des planaren Wellenleiters bilden;
- eine Aussparung (120; 220; 320), die sich von einer der Hauptflächen in den planaren Wellenleiter hinein erstreckt und eine Injektionszone bildet, die dazu konfiguriert ist, die Injektion von Lichtstrahlen in den planaren Wellenleiter durchzuführen; und
- eine Durchgangsöffnung (130; 230; 330), die sich von einer seiner Hauptflächen zur anderen in den planaren Wellenleiter hinein erstreckt und eine Extraktionszone bildet, die dazu konfiguriert ist, die Extraktion von Lichtstrahlen, die in die Injektionszone injiziert werden und sich im planaren Wellenleiter bewegt haben, aus dem planaren Wellenleiter durchzuführen.

2. Vorrichtung (100; 200) nach Anspruch 1, **dadurch gekennzeichnet, dass**:
- der planare Wellenleiter (110; 210) seine beiden Hauptflächen (111, 112) jeweils in Form eines Quadrats hat und die Form eines rechteckigen Parallelepipeds aufweist, und
- bei einer Projektion der Lichtverteilungsvorrichtung (100; 200) in die Ebene einer der Hauptflächen (111; 112) des planaren Wellenleiters die Aussparung (120; 220) und die Durchgangsöffnung (13; 230) jeweils auf einer Linie zentriert sind, die die Hauptfläche in zwei Rechtecke mit gleichen Abmessungen trennt, wobei die jeweiligen Mitten (121, 131) der Aussparung und der Durchgangsöffnung sich jeweils im gleichen Abstand von der Mitte der Hauptfläche befinden.

3. Vorrichtung (100; 200) nach Anspruch 2, **dadurch gekennzeichnet, dass** die Aussparung (120; 220) die Form einer ersten Pyramide hat, wobei die erste Pyramide eine gerade Pyramide mit quadratischer Grundfläche ist.

4. Vorrichtung (100) nach Anspruch 3, **dadurch gekennzeichnet, dass** die Durchgangsöffnung (130) die Form einer zweiten Pyramide mit abgestumpfter Spitze hat, wobei die zweite Pyramide eine gerade Pyramide mit quadratischer Grundfläche ist.

5. Vorrichtung (100) nach Anspruch 4, **dadurch gekennzeichnet, dass** die erste Pyramide und die zweite Pyramide jeweilige Basen aufweisen, die parallel zu den Hauptflächen des planaren Wellenleiters verlaufen, und in zwei entgegengesetzte Richtungen ausgerichtet sind.

6. Vorrichtung (200) nach Anspruch 3, **dadurch gekennzeichnet, dass** die Durchgangsöffnung (230) die Form eines Rotationsvolumens hat, das um eine Achse orthogonal zu den Hauptflächen des planaren Wellenleiters (210) unveränderlich ist, und dadurch, dass der Schnittpunkt zwischen dem planaren Wellenleiter und einer Mantellinie des Rotationsvolumens ein gebogenes Segment (231) umfasst.

7. Vorrichtung (300) nach Anspruch 1, **dadurch gekennzeichnet, dass**:
- der planare Wellenleiter (310) seine beiden Hauptflächen (311, 312) jeweils in Form einer Ellipse hat und die Form eines geraden Zylinders mit elliptischer Grundfläche aufweist,
- jede ellipsenförmige Hauptfläche (311, 312) mit zwei Brennpunkten (321, 331) versehen ist, und
- bei einer Projektion der Lichtverteilungsvorrichtung (300) in die Ebene einer der Hauptflächen (311, 312) des planaren Wellenleiters die Aussparung (320) und die Durchgangsöffnung (330) jeweils auf einen dieser Brennpunkte (321, 331) zentriert sind.

8. Vorrichtung (300) nach Anspruch 7, **dadurch gekennzeichnet, dass** die Aussparung (320) die Form eines ganzen oder an der Spitze abgestumpften Rotationskegels hat.

9. Vorrichtung (300) nach Anspruch 7 oder 8, **dadurch gekennzeichnet, dass** die Durchgangsöffnung (330) die Form eines Rotationsvolumens hat, das um eine Achse orthogonal zu den Hauptflächen (311, 312) des planaren Wellenleiters unveränderlich ist, und dadurch, dass der Schnittpunkt zwischen dem planaren Wellenleiter (310) und einer Mantellinie des Rotationsvolumens ein gebogenes Segment umfasst.

10. Vorrichtung (100; 200; 300; 10) nach einem der Ansprüche 1 bis 9, **dadurch gekennzeichnet, dass** der planare Wellenleiter (110; 210; 310) im Infrarotbereich transparent ist.

11. Vorrichtung (100; 200; 300; 10) nach einem der Ansprüche 1 bis 10, **dadurch gekennzeichnet, dass**:
- die Aussparung (120; 220; 320) dazu konfiguriert ist, die Injektion von Lichtstrahlen aus einem oberen Halbraum in den planaren Wellenleiter (110; 210; 310) durchzuführen; und
- die Durchgangsöffnung (130; 230; 330) dazu konfiguriert ist, die Extraktion von Lichtstrahlen aus dem planaren Wellenleiter (110; 210; 310) und in einen unteren Halbraum durchzuführen;
wobei der untere und der obere Halbraum zusammen einen dreidimensionalen Raum bilden und sich jeweils zu einer jeweiligen Seite einer Ebene parallel zu den Hauptflächen (111, 112; 311, 312) des planaren Wellenleiters erstrecken und auf halber Höhe durch den planaren Wellenleiter verlaufen.

12. Infrarot-Bildgebungssystem (1000), **dadurch gekennzeichnet, dass** es Folgendes aufweist:
- eine Lichtverteilungsvorrichtung (10) nach einem der Ansprüche 1 bis 11, die dazu konfiguriert ist, im Gebrauch Lichtstrahlen von einer zusätzlichen Lichtquelle auf eine zu beleuchtende Szene (2001) zu verteilen; und
- ein Detektionsmodul (12), das einen matrixförmigen Infrarotdetektor (12A) aufweist, der dazu konfiguriert ist, von der zu beleuchtenden Szene (2001) zurückgegebene Lichtstrahlen zu empfangen;
wobei der matrixförmige Infrarotdetektor (12A) sich gegenüber der Durchgangsöffnung (130; 230; 330) der Lichtverteilungsvorrichtung (10) befindet.

13. System (1000) nach Anspruch 12, **dadurch gekennzeichnet, dass** es ferner eine Infrarotlichtquelle (11) aufweist, die die zusätzliche Lichtquelle bildet, und wobei die Lichtverteilungsvorrichtung (10) dazu konfiguriert ist, im Gebrauch Lichtstrahlen von der Infrarotlichtquelle als Eingang zu empfangen und diese Strahlen über die zu beleuchtende Szene zu verteilen, wobei der Eingang der Lichtverteilungsvorrichtung durch die Aussparung (120; 220; 320) der Lichtverteilungsvorrichtung (10) gebildet wird.

14. System (1000) nach Anspruch 12 oder 13, **dadurch gekennzeichnet, dass** es ein Abstandselement (13) aufweist, das fest mit dem Detektionsmodul (12) verbunden montiert ist und eine Auflagefläche (13B) und eine Durchgangsöffnung (13A) aufweist, wobei sich die Auflagefläche (13B) auf einer dem Detektormodul (12) gegenüberliegenden Seite des Abstandselements (13) befindet und die Durchgangsöffnung (13A) sich gegenüber dem matrixförmigen Infrarotdetektor (12A) befindet, und dadurch, dass die Lichtverteilungsvorrichtung (10) das gesamte Abstandselement (13) oder einen Teil davon bildet.

## Claims

1. Light distribution device (100; 200; 300; 10) configured to distribute, in use, over a scene to be illuminated (20; 2001), light rays coming from a related light source, **characterized in that** it includes:
- a planar waveguide (110; 210; 310), two faces (111, 112; 311, 312) of which with the largest extent are parallel to each other and each form a respective principal face of the planar waveguide;
- a recess (120; 220; 320), which extends in the planar waveguide from one of the principal faces and forms an injection zone configured to implement the injection of light rays into the planar waveguide; and
- a through opening (130; 230; 330), which extends in the planar waveguide from one of the principal faces thereof to the other, and forms an extraction zone configured to implement the extraction, out of the planar waveguide, of the light rays that were injected into the injection zone and that circulated in the planar waveguide.

2. Device (100; 200) according to claim 1, **characterized in that**:
- the planar waveguide (110; 210) has its two principal faces (111, 112) each in a square shape and is in the form of a right-angled parallelepiped, and
- in a projection of the light distribution device (100; 200) in the plane of one of the principal faces (111; 112) of the planar waveguide, the recess (120; 220) and the through opening (13; 230) are each centered on a line separating said principal face into two rectangles with the same dimensions, with the respective centers (121, 131) of the recess and of the through opening each located at the same distance from the center of said principal face.

3. Device (100; 200) according to claim 2, **characterized in that** the recess (120; 220) is in the form of a first pyramid, where said first pyramid is a straight pyramid with a square base.

4. Device (100) according to claim 3, **characterized in that** the through opening (130) is in the form of a second pyramid truncated at the vertex, where said second pyramid is a straight pyramid with a square base.

5. Device (100) according to claim 4, **characterized in that** the first pyramid and the second pyramid have their respective bases parallel to the principal faces of the planar waveguide and are oriented in two opposite directions.

6. Device (200) according to claim 3, **characterized in that** the through opening (230) is in the form of a volume of revolution, invariant about an axis orthogonal to the principal faces of the planar waveguide (210), and **in that** the intersection between the planar waveguide and a generator of said volume of revolution comprises a curved segment (231).

7. Device (300) according to claim 1, **characterized in that**:
- the planar waveguide (310) has its two principal faces (311, 312) each in the form of an ellipse and is in the form of a straight cylinder with an elliptical base,
- each principal face (311, 312) in the form of an ellipse is provided with 2 foci (321, 331), and
- in a projection of the light distribution device (300) in the plane of one of the principal faces (311, 312) of the planar waveguide, the recess (320) and the through opening (330) are each centered on a respective one of said foci (321, 331).

8. Device (300) according to claim 7, **characterized in that** the recess (320) is in the form of a cone of revolution complete or truncated at the vertex.

9. Device (300) according to claim 7 or 8, **characterized in that** the through opening (330) is in the form of a volume of revolution, invariant about an axis orthogonal to the principal faces (311, 312) of the planar waveguide, and **in that** the intersection between the planar waveguide (310) and a generator of said volume of revolution comprises a curved segment.

10. Device (100; 200; 300; 10) according to any one of claims 1 to 9, **characterized in that** the planar waveguide (110; 210; 310) is transparent in the infrared.

11. Device (100; 200; 300; 10) according to any one of claims 1 to 10, **characterized in that**:
- the recess (120; 220; 320) is configured to implement the injection, into the planar waveguide (110; 210; 310), of light rays coming from an upper half-space; and
- the through opening (130; 230; 330) is configured to implement the extraction of light rays out of the planar waveguide (110; 210; 310) and to a lower half-space;
where the lower and upper half-spaces form together a three-dimensional space, and each extend from a respective side of a plane parallel to the principal faces (111, 112; 311, 312) of the planar waveguide and passing halfway up in the planar waveguide.

12. Infrared imaging system (1000), **characterized in that** it includes:
- a light distribution device (10) according to any one of claims 1 to 11, configured to distribute, in use, over a scene to be illuminated (2001), light rays coming from a related light source; and
- a detection module (12), including a matrix infrared detector (12A) configured to receive light rays returned by the scene to be illuminated (2001);
with the matrix infrared detector (12A) located facing the through opening (130; 230; 330) of the light distribution device (10).

13. System (1000) according to claim 12, **characterized in that** it furthermore includes an infrared light source (11) forming the related light source, and wherein the light distribution device (10) is configured to receive, in use, as an input, light rays coming from said infrared light source and to distribute these rays over the scene to be illuminated, with the entry of the light distribution device formed by the recess (120; 220; 320) of the light distribution device (10).

14. System (1000) according to claim 12 or 13, **characterized in that** it includes a spacing element (13) mounted secured to the detection module (12), and including a support surface (13B) and a through opening (13A), with the support surface (13B) located on one side of the spacing element (13) opposite to the detection module (12), and with the through opening (13A) located facing the matrix infrared detector (12A), and **in that** the light distribution device (10) forms all or part of the spacing element (13).
